# EUROPEAN PATENT APPLICATION

(11) **EP 4 749 474 A1**
(43) Date of publication of application: **27.05.2026**
(21) Application number: 25213626.2
(22) Date of filing: 05.11.2025
(51) Int. Cl.: G06F 16/2453

(54) **SYSTEMS AND METHODS FOR DYNAMICALLY CONFIGURABLE QUERY ENGINE WITH VISUAL EXPRESSION BUILDER**

(30) Priority: 20.11.2024 US 202418953173
(71) Applicant: Workday, Inc., Pleasanton, CA 94588 (US)
(72) Inventor: SUTTY, Alexandria, Pleasanton, CA 94588 (US); VELASQUEZ, Daniel, Pleasanton, CA 94588 (US); SOLOMON GHEBRENEGUS, Adonai, Pleasanton, CA 94588 (US); PAULIN, Kassie, Pleasanton, CA 94588 (US); BORGES, Paulo, Pleasanton, CA 94588 (US); MULHOLLAND, James, Pleasanton, CA 94588 (US)
(74) Representative: Boult Wade Tennant LLP

(57) **Abstract**

A device may receive a request for available fields at a field registry. A device may return field capabilities including field metadata describing valid operations and optimization hints for each available field. A device may validate field selections via a visual expression interface against the field registry to verify compatibility with operations and data relationships. A device may generate a formal expression based on the field selections. A device may store the formal expression for runtime evaluation.

## Description

### BACKGROUND

Computing systems commonly implement expression evaluation engines that process complex calculation trees and transform them into optimized database operations. Such systems often need to handle large volumes of data while maintaining referential integrity across multiple schema definitions and data types. Traditional expression engines execute multiple distinct database queries to gather dependent data, leading to increased computational overhead and resource consumption. Expression languages provide a structured format for defining computational logic that can be parsed, optimized, and evaluated by computing systems.

### BRIEF DESCRIPTION OF THE FIGURES

FIG. 1 is a block diagram illustrating an expression building and template management system.
FIG. 2 is a sequence diagram illustrating an expression building and template management process.
FIG. 3 is a flow diagram illustrating the runtime evaluation process of the query engine system.
FIG. 4 is a flow diagram illustrating a system and method for integrating custom fields and distributing rating rules across an enterprise system.
FIG. 5 is a block diagram of a computing device according to some embodiments of the disclosure.

### DETAILED DESCRIPTION

Traditional computer systems often execute separate database queries to gather data for each corresponding calculation, leading to significant computational overhead and resource consumption when processing large volumes of data. These systems often maintain complex stored procedures or hard-coded business logic that require engineering intervention to modify, creating system bottlenecks and increasing maintenance complexity. Furthermore, existing solutions store calculation logic in formats that cannot be efficiently parsed or optimized, resulting in redundant data retrieval operations and inefficient query execution paths.

The present disclosure provides technical improvements through a system that optimizes database operations by automatically generating consolidated queries from visual expressions. The system implements a specialized parser that transforms visual calculation trees into formal expressions while maintaining bidirectional mapping capabilities. This allows the system to analyze dependencies across multiple calculation nodes and generate optimized single-query execution plans that minimize database round trips and reduce computational resource requirements.

The system further improves system efficiency through an intelligent aggregation engine that leverages pre-optimized data retrieval strategies established during field registry setup. By maintaining a field registry that tracks data dependencies and aggregation capabilities, the system can utilize these pre-defined optimizations to reduce memory overhead during calculation execution.

In some implementations, the techniques described herein relate to a method including: receiving a request for available fields at a field registry; returning field capabilities including field metadata describing valid operations and optimization hints for each available field; validating field selections via a visual expression interface against the field registry to verify compatibility with operations and data relationships; generating a formal expression based on the field selections; and storing the formal expression for runtime evaluation.

In some implementations, the techniques described herein relate to a method, wherein validating field selections includes: validating against pre-optimized query paths defined in the field registry metadata; verifying compatibility with optimized field relationships established during metadata setup; and evaluating selected field combinations against stored optimization metadata.

In some implementations, the techniques described herein relate to a method, wherein generating the formal expression includes: maintaining bidirectional mappings between visual representations and generated expressions; analyzing temporal dependencies between fields; identifying opportunities for parallel evaluation of independent branches; and normalizing expression patterns while preserving semantic relationships.

In some implementations, the techniques described herein relate to a method, wherein the field metadata includes: aggregation capabilities for each field; temporal characteristics indicating time-based operation support; optimization hints based on underlying data distribution; and relationship mappings to at least one other field.

In some implementations, the techniques described herein relate to a method, further including: implementing incremental updates to expressions without complete regeneration; maintaining calculation precision through controlled rounding operations.

In some implementations, the techniques described herein relate to a method, further including: receiving a request to load a rule template; returning a template structure including customization points; and receiving template customization instructions.

In some implementations, computer-readable media and devices for performing the foregoing methods are further described.

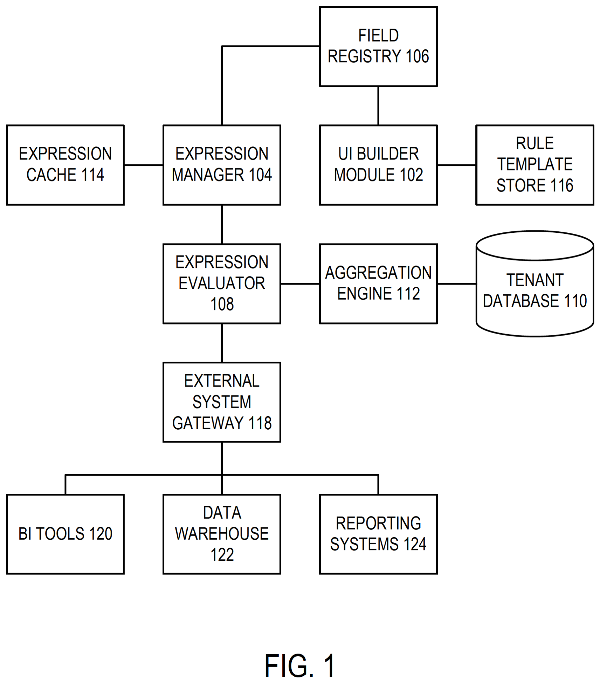

FIG. 1 is a block diagram illustrating an expression building and template management system. The system includes several interconnected components that work together to provide expression processing and data evaluation capabilities, as discussed in more detail herein.

UI builder module 102 provides the entry point for expression creation and modification. In some implementations, the UI builder module 102 can create a structured tree-based representation of expressions that maintains semantic meaning throughout the expression building process. The UI builder module 102 interacts with the expression manager 104 by transmitting visual tree structures that represent the logical relationships between calculation nodes, conditional elements, and field references. These tree structures preserve the mathematical and logical relationships between elements while enabling bidirectional transformation between visual and formal expression formats.

The expression manager 104 serves as the core processing component for handling expression transformations and maintaining expression state. Upon receiving a visual tree from the UI builder module 102, the expression manager 104 performs semantic analysis to validate the logical structure and generates corresponding textual expressions. In some implementations, the textual expressions can be written in FEEL (Friendly Enough Expression Language) or similar languages.

The expression manager 104 maintains internal state information about expressions, including dependency graphs that track relationships between different calculation components. This enables the system to optimize query generation and execution by understanding how different parts of an expression relate to each other. The expression manager 104 also implements version control capabilities, tracking changes to expressions and maintaining historical versions to enable rollback operations if needed.

Field registry 106 maintains a comprehensive catalog of available fields and their capabilities across the system. In some implementations, the field registry 106 stores metadata about each field's characteristics, including (without limitation) data types, aggregation capabilities, and optimization hints for query generation. During field registration, the system performs comprehensive optimization analysis, including analyzing potential query paths, identifying field relationships, and determining optimal data access patterns. These optimizations are stored as part of the field metadata and are used to guide subsequent query execution rather than performing optimization at runtime.

Expression evaluator 108 handles the actual execution of FEEL (or similar) expressions generated by the expression manager 104. In some implementations, the expression evaluator 108 can examine expression structures to identify opportunities for parallel processing, determines optimal evaluation order based on dependencies, and generates execution plans that minimize computational overhead. The expression evaluator 108 also implements caching strategies to avoid redundant calculations when evaluating similar expressions across different contexts.

In some implementations, aggregation engine 112 implements the system's single-query optimization approach. Traditional systems generally execute multiple separate queries to gather data for complex calculations, leading to increased database load and potential performance issues. By contrast, aggregation engine 112 analyzes expression dependencies and field requirements to generate optimized database queries that retrieve all necessary data in a single operation. It implements query planning algorithms that consider factors such as join complexity, data volume, and index availability to determine the most efficient query structure. The aggregation engine 112 also handles temporal aspects of data retrieval, ensuring that time-based calculations correctly account for different evaluation periods and billing cycles.

Tenant database 110 stores the underlying data required for expression evaluation. The system implements a flexible schema design that accommodates both standard and custom fields while maintaining query optimization capabilities. Through the single-query approach implemented by the aggregation engine 112, the system minimizes database load by reducing the number of separate queries required for expression evaluation. The database interface includes specialized optimizations for handling time-series data and hierarchical relationships commonly found in subscription and usage data.

Expression cache 114 provides a caching layer that improves system performance by storing frequently used expressions and partial calculation results. In some implementations, the expression cache 114 understands expression semantics and can identify when cached results can be safely reused even if expressions are not exactly identical. The cache implements invalidation strategies based on data dependencies and temporal constraints to ensure accuracy while maximizing cache utilization.

The external system gateway 118 enables integration with external systems while maintaining the performance benefits of the system's optimization capabilities. It can implement standardized interfaces for data exchange with BI tools 120, data warehouse 122, and reporting systems 124. In some implementations, the gateway includes intelligence about data formats and transformation requirements, enabling efficient data exchange without compromising the system's optimization capabilities.

The rule template store 116 extends the system's expression handling capabilities by implementing a template management system. Templates are stored as abstract expression structures that can be instantiated with specific fields and parameters while maintaining optimization capabilities. The template system includes version control and dependency tracking to ensure that changes to base templates can be properly propagated to dependent expressions.

The components of FIG. 1 work together to implement several technical improvements over traditional query systems. The bidirectional mapping between visual representations and formal expressions enables optimization while maintaining ease of modification. The single-query approach implemented through the aggregation engine 112 significantly reduces database load compared to traditional multiple-query approaches. The intelligent caching system improves performance while maintaining accuracy through semantic understanding of expressions and their dependencies.

The system architecture enables several advanced capabilities through its component interactions. Expression validation occurs at multiple levels: the UI builder module 102 enforces structural correctness, the expression manager 104 validates semantic relationships, and the field registry 106 ensures field compatibility. This multi-layer validation approach prevents invalid expressions while maintaining system performance. The optimization pipeline spans multiple components, with the expression manager 104 performing initial analysis, the expression evaluator 108 optimizing execution plans, and the aggregation engine 112 generating efficient database queries.

Data flow through the system is optimized at each stage. The UI builder module 102 maintains compact tree representations that capture essential relationships without unnecessary overhead. The expression manager 104 transforms these into optimized FEEL expressions that preserve semantic meaning while enabling efficient evaluation. The aggregation engine 112 converts expression requirements into optimized database queries that minimize data transfer and processing overhead. This coordinated optimization approach ensures efficient system operation even with complex expressions and large data volumes.

The system implements error handling and recovery mechanisms throughout the component chain. The expression cache 114 includes failover capabilities to prevent performance degradation if cache issues occur. The aggregation engine 112 implements query timeout and retry logic to handle database connection issues gracefully. The expression manager 104 maintains expression state information that enables recovery from interrupted operations without losing work or requiring full recalculation.

The architecture's modular design enables system extension while maintaining performance optimizations. New field types can be added through the field registry 106 without requiring changes to other components. Additional expression capabilities can be implemented in the expression manager 104 while leveraging existing optimization and evaluation capabilities. The external system gateway 118 can be extended to support new integration requirements without impacting core system performance.

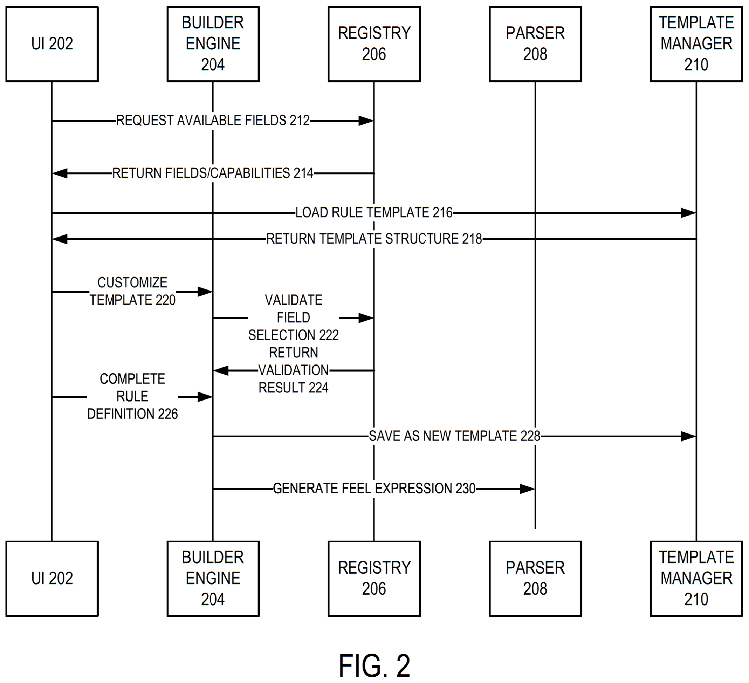

FIG. 2 is a sequence diagram illustrating an expression building and template management process. The sequence includes interactions between the UI 202, builder engine 204, registry 206, parser 208, and template manager 210, as discussed in more detail herein.

In step 212, the method can include receiving a request at the registry 206 for available fields from the UI 202. This request initiates the expression building process by establishing the set of valid fields that can be incorporated into the expression. Rather than simply returning a static list, the registry 206 performs real-time analysis of available fields, including both system-defined and custom fields. In some implementations, the UI 202 can comprise a web-based or application-based user interface providing a visual canvas for "dragging" components to form visual representations of expressions and their individual components.

In some implementations, the registry 206 can analyze field metadata to determine valid operations and aggregation capabilities for each field. This analysis can include examining data types, checking for presence of indexes, and evaluating potential optimization strategies that could be applied during query generation.

In step 214, the method can include returning the analyzed field capabilities to the UI 202. The returned data structure includes not only field identifiers but also detailed metadata about each field's capabilities, valid operations, and optimization hints. This enables intelligent field suggestion and validation during expression building.

In some implementations, the returned field capabilities can include temporal characteristics of fields, indicating whether fields support time-based aggregations or comparisons. The system can also return information about field relationships, enabling the UI to suggest related fields that might be relevant to the expression being built.

In step 216, the method can include sending a request to load a rule template from the UI 202 to the template manager 210. Rather than starting with an empty expression, users can leverage existing templates as starting points for new expressions. In some implementations, the template manager 210 can analyze the requested template to identify required fields and dependencies before returning the template structure. This analysis enables early validation of template compatibility with available fields and system capabilities.

In step 218, the method can include returning the template structure to the UI 202. The returned template includes both the expression structure and metadata about customization points where the template can be modified. In some implementations, the template structure can include optimization hints derived from previous usage of the template. These hints can help guide the expression building process toward patterns known to perform well in production environments.

In step 220, the method can include sending template customization instructions from the UI 202 to the builder engine 204. These instructions specify how the template should be modified to meet specific requirements while maintaining the template's core structure and optimization characteristics. In some implementations, the builder engine 204 can analyze customization instructions to ensure they maintain the template's semantic integrity. This can include validating that customizations don't introduce circular dependencies or break optimization assumptions.

In step 222, the method can include validating field selections by sending a request from the builder engine 204 to the registry 206. This validation is implemented through prebuilt UI components that constrain users to select only compatible fields and expressions. The registry 206 provides information about available fields and their relationships, which determines what options are presented to users in the interface.

In step 224, the method can include returning field compatibility information from the registry 206 to the builder engine 204. This information is used to construct appropriate UI controls that guide users toward valid field combinations by only presenting compatible options at each step of expression construction. The UI components reflect the relationships and rules stored in the registry, ensuring expressions can only be built using valid combinations.

In step 226, the method can include completing the rule definition by sending the finalized structure from the UI 202 to the builder engine 204. This structure represents the complete expression with all customizations and modifications applied. In some implementations, the builder engine 204 can perform final validation of the complete expression structure before proceeding with template storage and expression generation. This can include checking for completeness, logical consistency, and optimization potential.

In step 228, the method can include saving the customized expression as a new template by sending it from the builder engine 204 to the template manager 210. This enables reuse of successful expression patterns while maintaining the relationship with the original template. In some implementations, the template manager 210 can analyze the new template to automatically generate documentation and usage guidelines based on its structure and capabilities. This can include identifying customization points and providing performance optimization suggestions.

In step 230, the method can include generating the final FEEL expression by sending the completed structure from the builder engine 204 to the parser 208. This translation process converts the visual representation into an optimized formal expression while preserving all semantic relationships. In some implementations, the parser 208 can employ multiple parsing strategies based on expression characteristics. This can include specialized parsing approaches for different types of calculations, conditional logic, and temporal operations.

The parser 208 can implement optimization techniques during expression generation. These techniques enable reordering operations to minimize intermediate result sets while preserving semantic correctness. Additionally, the system performs detailed analysis of temporal dependencies to optimize time-based calculations and ensure efficient data retrieval patterns.

In some implementations, the parser 208 can maintain bidirectional mappings between the visual representation and the generated FEEL expression. This capability enables reconstruction of visual representations from stored expressions, allowing users to modify existing expressions without requiring complete regeneration. The bidirectional mapping also supports debugging capabilities that correlate expression components with their visual elements, while enabling version control systems to track changes at both visual and expression levels.

The parser 208 can also implement expression normalization techniques that standardize expression patterns for consistent evaluations across the system. This normalization process removes redundant operations while carefully preserving the semantic meaning of the expression. The system optimizes Boolean conditions for efficient evaluation and can restructure expressions to leverage database-specific optimizations when available.

In some implementations, the entire sequence can support transactional behavior throughout the expression building process. This enables atomic updates to expression definitions and provides rollback capabilities if errors occur during any step of the sequence. The transactional support ensures consistent views of expressions during modification processes and enables proper handling of concurrent expression modifications from multiple users or system components.

The illustrated sequence can include analysis capabilities that examine expression patterns during construction.

Some implementations may leverage artificial intelligence to analyze charge model performance and effectiveness. This AI capability could help identify optimal price points and determine which charge models are most successful in different market segments or customer scenarios, enabling data-driven refinement of pricing strategies. The system architecture is designed to accommodate such AI-driven insights while maintaining the performance benefits of the existing optimization framework.

The builder engine 204 implements state management capabilities that extend beyond simple expression storage. The system maintains detailed modification history and supports collaborative expression building across multiple users or teams. This state management enables advanced expression comparison and merging capabilities while maintaining the semantic integrity of the expressions throughout their lifecycle.

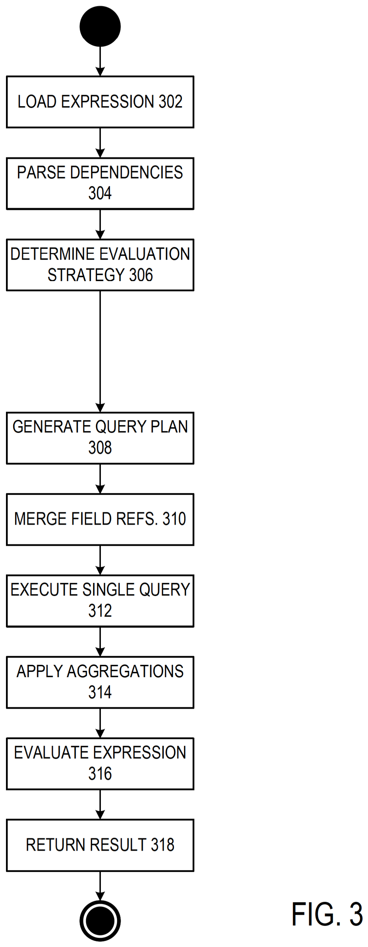

FIG. 3 is a flow diagram illustrating the runtime evaluation process of the query engine system.

In step 302, the method can include loading an expression for evaluation by the system.

In some implementations, the loading process includes validation of input parameters, initialization of processing contexts, and allocation of computational resources based on expression complexity. This initialization phase may also include preparation of monitoring interfaces to track performance metrics throughout the evaluation process.

During the reception process, the method validates that the expression aligns with permitted rating models for billing systems. The method analyzes whether the expression involves subscription-based calculations, consumption-based pricing, or hybrid models. This initial analysis helps determine whether specialized handling is needed for features like minimum commitments, usage caps, or tiered pricing structures, etc.

During expression loading, the method performs validation of the expression structure and its dependencies. This validation process can include verification of field references against current schema definitions, analysis of temporal dependencies, and confirmation of necessary access permissions. The loading process may implement progressive loading techniques for large expressions, enabling partial evaluation to begin before the entire expression is loaded. The method can also perform preliminary optimization analysis during loading to identify opportunities for computation reuse.

In step 304, the method can include parsing the expression dependencies to construct a dependency graph.

The dependency parsing process examines both explicit and implicit relationships within the expression structure. The method can analyze temporal dependencies to identify calculations that span multiple time periods or require historical data access. Dependency analysis may include examination of field relationships to identify optimal join strategies and data access patterns.

The dependency parsing is particularly important for consumption-based billing scenarios where calculations may need to reference historical usage data, accumulated totals, or comparative metrics. The method specifically identifies dependencies that require cross-time-period analysis, such as comparing current month usage against annual totals or evaluating minimum commitment thresholds across billing cycles.

In step 306, the method can include analyzing the expression type to determine appropriate evaluation strategies, as described in more detail herein. While three strategies are depicted, the specification is not limited as such.

In some implementations, the method categorizes expressions based on their computational characteristics, including identification of tiered pricing calculations, time-based rules, and conditional logic patterns. This categorization enables the method to apply specialized optimization techniques appropriate for each expression type.

In some implementations, the method categorizes expressions based on their computational characteristics. The method can identify specific pricing models including tiered consumption rates, minimum commitment calculations, maximum usage caps, and time-based discounting rules. For consumption-based pricing, the method can analyze whether calculations require aggregation across different time periods or comparison against historical usage patterns. The analysis also identifies whether the expression requires access to custom fields storing negotiated terms or customer-specific thresholds.

In some implementations, the method identifies opportunities for optimizing FEEL expression evaluation based on the expression type. For tiered calculations, the method can analyze tier boundary conditions to minimize comparison operations and implement efficient range checking. For time-based rules, the method can identify sliding window calculations that benefit from specialized temporal indexing strategies. For conditional logic, the method can analyze Boolean expression patterns to implement short-circuit evaluation and minimize unnecessary computations. The method also considers how expression types impact query plan generation, particularly when expressions involve complex joins between usage data and customer-specific threshold values stored in custom fields. This analysis enables the system to generate optimized database queries that efficiently retrieve and process only the data required for each specific expression type.

In step 308, the method can include generating an optimized query plan for data retrieval.

The query planning process analyzes execution strategies to determine optimal data access patterns. The method can consider index availability, data distribution patterns, and join complexity when constructing query plans. Planning may include cost-based optimization to select between alternative execution strategies. The method can generate specialized query patterns for different database engines to leverage platform-specific optimizations. In some implementations, the query planning process is optimized for subscription and usage-based billing scenarios, where data often needs to be aggregated across different time periods and compared against various thresholds. The method can retrieve and process usage data, particularly when evaluations span different time periods or require comparison of usage patterns across different billing cycles.

In some implementations, the query planning process implements a novel consolidation approach that transforms multiple potential database operations into a single optimized query. Rather than executing separate queries for usage data, customer thresholds, and temporal comparisons, the method analyzes the complete set of data dependencies to generate a unified query plan. This consolidation process examines field relationships exposed through the field registry, analyzes potential join paths, and evaluates execution costs for different query structures. The method implements dependency analysis to ensure that all required data, including custom fields storing negotiated terms and historical usage patterns, can be retrieved efficiently. The planner also considers how different aggregation operations, such as period-over-period comparisons or cumulative usage calculations, can be optimized within the single query execution. This approach significantly reduces database load compared to traditional systems that might execute separate queries for each component of a complex calculation.

**In** step 310, the method can include merging multiple field references into consolidated database operations.

The method can analyze the complete set of required data access operations to minimize database round trips. The method can implement join optimization to ensure efficient data retrieval across multiple tables or data sources. The merge operation may include analysis of data locality to optimize cache utilization and minimize memory overhead.

**In** some implementations, the field merging process implements specialized handling of temporal and custom field relationships. The method analyzes temporal dependencies between fields to identify opportunities for optimizing time-based joins, such as when comparing current period usage against historical aggregates or evaluating accumulated totals across billing cycles. For custom fields storing negotiated terms or customer-specific thresholds, the method implements dynamic join path selection that considers both the field's temporal characteristics and its relationship to standard fields. The merge operation also includes analysis of aggregation requirements, implementing efficient strategies for combining data across different time periods while maintaining proper temporal context. This analysis enables the system to generate optimal join sequences that minimize intermediate result sets while ensuring all necessary data relationships are preserved. The method maintains a dependency graph during the merge process to track both direct and indirect relationships between fields, enabling it to identify opportunities for join reordering and predicate pushdown optimizations that can improve query performance.

In step 312, the method can include executing the optimized query plan through a single database operation.

The method can implement error handling and retry logic. The method can manage connection pooling and resource allocation to optimize database utilization. Execution may include progressive result processing to enable efficient data retrieval. In some implementations, the query execution process implements specialized handling of large-scale usage data and complex calculation patterns. The method utilizes an intelligent buffering system that can progressively process usage data as it's retrieved, enabling immediate calculation of running totals and threshold comparisons without requiring all data to be loaded into memory. For queries involving tiered calculations, the execution engine implements dynamic boundary evaluation that can efficiently process usage data against multiple tier thresholds in a single pass. The method also implements caching strategies during execution, maintaining partial results for common calculation patterns while ensuring cache coherency across different time periods and customer contexts. When executing queries that span multiple billing cycles or evaluation periods, the execution engine maintains separate temporal contexts for each period to ensure accurate handling of time-based aggregations and comparisons. The method includes performance monitoring capabilities that track query execution statistics at a granular level, enabling the system to continuously refine its optimization strategies based on actual execution patterns.

In step 314, the method can include applying aggregation operations to the retrieved dataset.

The aggregation process implements memory-efficient processing strategies for large datasets. The method can perform incremental aggregation to minimize memory requirements for large result sets. Processing may include specialized handling of temporal aggregations and efficient management of grouping operations. In some implementations, the aggregation process implements specialized strategies for handling complex subscription and usage calculations. The method utilizes a multi-phase aggregation approach where initial aggregations are performed during query execution, followed by higher-level aggregations that combine results across different temporal contexts. For usage-based calculations, the aggregation engine maintains separate accumulation contexts for different time periods (e.g., monthly usage, annual totals, contract-to-date values) while ensuring consistent handling of boundary conditions between periods. The method implements specialized aggregation optimizations for common patterns in subscription calculations, such as efficiently computing running totals for minimum commitment evaluation or maintaining sliding window aggregates for usage cap calculations. The aggregation engine also includes intelligent memory management that can spill intermediate results to disk when processing large usage datasets while maintaining efficient access patterns for subsequent aggregation phases. When aggregating data involving custom fields, the engine implements dynamic aggregation path selection based on field characteristics and optimization hints stored in the field registry, ensuring optimal performance even with tenant-specific calculation requirements.

In step 316, the method can include evaluating the FEEL expression against the prepared dataset.

In some implementations, the method implements systematic processing of the expression components. The method can maintain precise numeric handling through rounding and precision management. Evaluation may include optimization of conditional logic to minimize unnecessary calculations. The engine can implement efficient handling of null values and error conditions throughout the calculation process.

In some implementations, the method implements FEEL interpretation optimized for billing calculations. The method maintains precise numeric handling essential for financial calculations through rounding and precision management. The evaluation engine includes specialized handling for common billing scenarios such as tiered pricing transitions, minimum commitment evaluations, and usage cap calculations. The engine can efficiently process consumption data across different time periods while maintaining proper temporal context for each calculation phase.

In some implementations, the method also can include managing version control for the evaluation process and results. The version control system maintains detailed metadata about expression versions and execution contexts. The method can implement efficient storage of historical results and calculation parameters. Processing may include comparison capabilities across different expression versions or time periods.

In some implementations, the FEEL evaluation process maintains bidirectional mappings between the visual representation and the executing expression components, enabling real-time debugging and performance optimization. The method implements a specialized evaluation strategy that preserves the semantic relationships defined in the visual builder while executing optimized calculation paths. For expression patterns identified in the template library, the evaluation engine can apply pre-optimized execution strategies based on historical performance metrics. The engine implements intelligent subexpression caching that identifies common calculation patterns across different expressions, enabling reuse of intermediate results while maintaining proper scoping and temporal context. When evaluating expressions involving custom fields, the engine utilizes field metadata from the registry to apply field-specific optimization strategies, such as specialized handling for different data types or aggregation patterns. The evaluation process also includes real-time performance monitoring that captures execution statistics at both the expression and subexpression level, feeding this data back into the template optimization system to continuously improve performance patterns.

In step 318, the method can include returning the calculated results with associated metadata.

The result packaging process includes performance statistics and optimization details. The method can implement error reporting while maintaining transaction integrity. Processing may include formatting of results based on caller requirements and preparation of audit information. In some implementations, the result packaging process implements data transformation and integration capabilities through the external system gateway. The method maintains optimization context during result packaging, preserving metadata about field relationships, temporal constraints, and calculation dependencies that can be utilized by receiving systems. For results involving usage-based calculations, the method includes detailed aggregation lineage that tracks how different time periods and thresholds contributed to the final calculation. The packaging process implements streaming interfaces for large result sets, with built-in checkpoint and resume capabilities for handling connection interruptions. When results include custom field calculations, the method includes field registry metadata that enables receiving systems to properly interpret and validate the results. The system also maintains a performance metrics subsystem that captures detailed timing and resource utilization statistics at multiple levels: query execution, aggregation processing, FEEL evaluation, and result transformation. These metrics are stored with version control information to enable performance comparison across different expression versions and optimization patterns. For results destined for external business intelligence or reporting systems, the method implements specialized formatting that preserves the semantic relationships between calculation components while enabling efficient post-processing and analysis.

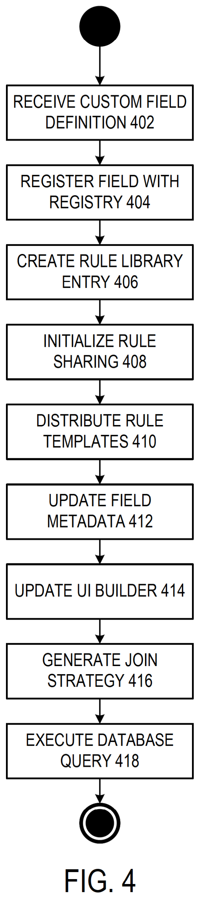

FIG. 4 is a flow diagram illustrating a method for integrating custom fields and distributing rating rules across an enterprise system.

In step 402, the method can include receiving a custom field definition for registration with the system.

In some implementations, the method specifically handles fields needed for complex B2B billing scenarios, such as customer-specific thresholds, negotiated minimum commitments, and usage caps. In some implementations, the method can automatically detect field data types and determine whether the field will be used for consumption tracking, threshold comparisons, or price calculations. This registration phase analyzes relationships with existing subscription and billing fields to identify potential optimization opportunities. In some implementations, the method evaluates how the new field might impact existing rating expressions, particularly those involving usage calculations or tiered pricing models.

In step 404, the method can include registering the custom field with the field registry to make it available for expression building.

During field registration, the method catalogs the field's capabilities particularly relevant to billing calculations. The registration process includes automatic generation of validation rules that ensure proper numeric precision for financial calculations and appropriate temporal constraints for usage-based fields. Field registration also generates specialized access methods optimized for the types of queries common in rating calculations, such as period-over-period comparisons or cumulative usage calculations.

In step 406, the method can include creating entries in the rule library for sharing across the system.

In some implementations, the method implements versioning and dependency tracking specifically designed for billing rules. The method analyzes rule patterns to identify common rating calculations, such as tiered pricing structures or minimum commitment evaluations. In some implementations, the method can utilize one or more machine learning models trained on historical rule performance data to identify optimal rating calculations for specific billing scenarios to suggest rules based on past performance and customer requirements.

In step 408, the method can include initializing rule sharing through the rule sharing engine.

In some implementations, the method manages distribution of rating rules across different parts of the billing system. The method can implement caching strategies optimized for rules that are frequently accessed during billing cycles. The method can include validation to ensure that rating rules remain valid across different customer contexts and tenant configurations, particularly important for rules involving custom fields containing negotiated terms.

In step 410, the method can include distributing rule templates across the system.

In some implementations, the method process analyzes how rating rules apply to different product types and billing models. In some implementations, the method validates that templates properly handle various pricing scenarios including consumption-based billing, subscription fees, and hybrid models. In some implementations, the method ensures that templates maintain proper handling of time-based calculations and usage thresholds across different deployment contexts.

In step 412, the method can include updating field metadata based on runtime analysis.

In some implementations, the method continuously analyzes how fields are used in rating calculations, paying particular attention to performance patterns in usage-based billing scenarios.

In step 414, the method can include updating the UI builder with the new capabilities.

In some implementations, the method ensures that the drag-and-drop expression builder properly exposes new fields and rating capabilities. In some implementations, the method generates appropriate visual representations for different types of rating calculations, making complex billing logic accessible through the visual interface. The builder maintains consistency between the visual representation and the underlying FEEL expressions used for rating calculations.

In step 416, the method can include generating optimized join strategies.

In some implementations, the method specifically considers the relationships between usage data, subscription terms, and customer-specific fields. In some implementations, the method implements cost-based optimization that understands the access patterns common in rating calculations, such as joining usage data with tier definitions or customer thresholds. The optimization process maintains performance metrics to guide future query planning for similar rating scenarios.

In step 418, the method can include generating optimized queries.

In some implementations, the method implements specialized optimization for rating calculations, particularly focused on efficient retrieval and processing of usage data. In some implementations, the method system generates query plans that minimize database operations when evaluating usage against thresholds or calculating tiered pricing. In some implementations, the method maintains statistics about query performance in different billing scenarios to inform future optimization decisions.

In step 418, the method can include executing the database queries.

In some implementations, the method implements handling of large usage datasets common in billing scenarios. In some implementations, the method manages connection pooling and resource allocation to optimize performance during high-volume billing cycles. In some implementations, the method maintains performance metrics specific to different types of rating calculations to guide future optimization efforts.

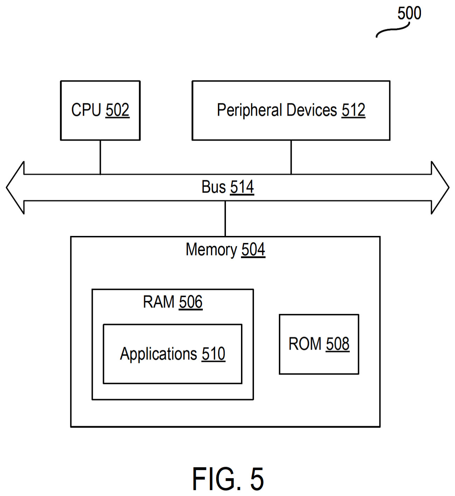

FIG. 5 is a block diagram of a computing device according to some embodiments of the disclosure.

As illustrated, the device 500 includes a processor or central processing unit (CPU) such as CPU 502 in communication with a memory 504 via a bus 514. The device also includes one or more input/output (I/O) or peripheral devices 512. Examples of peripheral devices include, but are not limited to, network interfaces, audio interfaces, display devices, keypads, mice, keyboard, touch screens, illuminators, haptic interfaces, global positioning system (GPS) receivers, cameras, or other optical, thermal, or electromagnetic sensors.

In some embodiments, the CPU 502 may comprise a general-purpose CPU. The CPU 502 may comprise a single-core or multiple-core CPU. The CPU 502 may comprise a system-on-a-chip (SoC) or a similar embedded system. In some embodiments, a graphics processing unit (GPU) may be used in place of, or in combination with, a CPU 502. Memory 504 may comprise a memory system including a dynamic random-access memory (DRAM), static random-access memory (SRAM), Flash (e.g., NAND Flash), or combinations thereof. In one embodiment, the bus 514 may comprise a Peripheral Component Interconnect Express (PCIe) bus. In some embodiments, the bus 514 may comprise multiple busses instead of a single bus.

Memory 504 illustrates an example of a non-transitory computer storage media for the storage of information such as computer-readable instructions, data structures, program modules, or other data. Memory 504 can store a basic input/output system (BIOS) in read-only memory (ROM), such as ROM 508 for controlling the low-level operation of the device. The memory can also store an operating system in random-access memory (RAM) for controlling the operation of the device.

Applications 510 may include computer-executable instructions which, when executed by the device, perform any of the methods (or portions of the methods) described previously in the description of the preceding figures. In some embodiments, the software or programs implementing the method embodiments can be read from a hard disk drive (not illustrated) and temporarily stored in RAM 506 by CPU 502. CPU 502 may then read the software or data from RAM 506, process them, and store them in RAM 506 again.

The device may optionally communicate with a base station (not shown) or directly with another computing device. One or more network interfaces in peripheral devices 512 are sometimes referred to as a transceiver, transceiving device, or network interface card (NIC).

An audio interface in peripheral devices 512 produces and receives audio signals such as the sound of a human voice. For example, an audio interface may be coupled to a speaker and microphone (not shown) to enable telecommunication with others or generate an audio acknowledgment for some action. Displays in peripheral devices 512 may comprise liquid crystal display (LCD), gas plasma, light-emitting diode (LED), or any other type of display device used with a computing device. A display may also include a touch-sensitive screen arranged to receive input from an object such as a stylus or a digit from a human hand.

A keypad in peripheral devices 512 may comprise any input device arranged to receive input from a user. An illuminator in peripheral devices 512 may provide a status indication or provide light. The device can also comprise an input/output interface in peripheral devices 512 for communication with external devices, using communication technologies, such as USB, infrared, Bluetooth^{®}, or the like. A haptic interface in peripheral devices 512 provides tactile feedback to a user of the client device.

A GPS receiver in peripheral devices 512 can determine the physical coordinates of the device on the surface of the Earth, which typically outputs a location as latitude and longitude values. A GPS receiver can also employ other geo-positioning mechanisms, including, but not limited to, triangulation, assisted GPS (AGPS), E-OTD, CI, SAI, ETA, BSS, or the like, to further determine the physical location of the device on the surface of the Earth. In one embodiment, however, the device may communicate through other components, providing other information that may be employed to determine the physical location of the device, including, for example, a media access control (MAC) address, Internet Protocol (IP) address, or the like.

The device may include more or fewer components than those shown, depending on the deployment or usage of the device. For example, a server computing device, such as a rack-mounted server, may not include audio interfaces, displays, keypads, illuminators, haptic interfaces, Global Positioning System (GPS) receivers, or cameras/sensors. Some devices may include additional components not shown, such as graphics processing unit (GPU) devices, cryptographic co-processors, artificial intelligence (AI) accelerators, or other peripheral devices.

The subject matter disclosed above may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The preceding detailed description is, therefore, not intended to be taken in a limiting sense.

Throughout the specification and claims, terms may have nuanced meanings suggested or implied in context beyond an explicitly stated meaning. Likewise, the phrase "in an embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and," "or," or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present application is described with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general-purpose computer to alter its function as detailed herein, a special purpose computer, application-specific integrated circuit (ASIC), or other programmable data processing apparatus, such that the instructions, which execute via the processor of the computer or other programmable data processing apparatus, implement the functions/acts specified in the block diagrams or operational block or blocks. In some alternate implementations, the functions or acts noted in the blocks can occur out of the order noted in the operational illustrations. For example, two blocks shown in succession can in fact be executed substantially concurrently or the blocks can sometimes be executed in the reverse order, depending upon the functionality or acts involved.

## Claims

1. A method comprising:
receiving a request for available fields at a field registry;
returning field capabilities including field metadata describing valid operations and optimization hints for each available field;
validating field selections via a visual expression interface against the field registry to verify compatibility with operations and data relationships;
generating a formal expression based on the field selections; and
storing the formal expression for runtime evaluation.

2. The method of claim 1, wherein validating field selections comprises:
validating against pre-optimized query paths stored in the field registry metadata;
verifying compatibility with optimized field relationships established during field registration;
evaluating selected field combinations against stored optimization metadata.

3. The method of any one of the preceding claims, wherein generating the formal expression comprises:
maintaining bidirectional mappings between visual representations and generated expressions;
analyzing temporal dependencies between fields;
identifying opportunities for parallel evaluation of independent branches; and
normalizing expression patterns while preserving semantic relationships.

4. The method of any one of the preceding claims, further comprising:
retrieving pre-analyzed execution patterns stored in the field registry; and
generating query plans that consolidate multiple field references into a single database operation based on stored optimization metadata.

5. The method of any one of the preceding claims, wherein the field metadata comprises:
aggregation capabilities for each field;
temporal characteristics indicating time-based operation support;
optimization hints based on underlying data distribution; and
relationship mappings to at least one other field.

6. The method of any one of the preceding claims, further comprising:
implementing incremental updates to expressions without complete regeneration;
maintaining calculation precision through controlled rounding operations.

7. The method of any one of the preceding claims, further comprising:
receiving a request to load a rule template;
returning a template structure including customization points; and
receiving template customization instructions.

8. A computer program that, when executed by a computer processor, causes the computer processor to carry out the method of any one of the preceding claims.

9. A computer readable medium storing the computer program of claim 8.

10. A device comprising:
a processor; and
a memory for storing computer program instructions that, when executed, cause the processor to carry out the method of any one of claims 1 to 7.
